# EUROPEAN PATENT APPLICATION

(11) **EP 1 473 217 A1**
(43) Date of publication of application: **03.11.2004**
(21) Application number: 03425278.3
(22) Date of filing: 30.04.2003
(51) Int. Cl.: B62K 23/02, B62L 3/02

(54) **Covering sheath for a bicycle component**

(71) Applicant: Campagnolo Srl, 36100 Vicenza (VI) (IT)
(72) Inventor: Dal Pra', Giuseppe, 36010 Zané (Vicenza) (IT)
(74) Representative: Riccardi, Elisa

(57) **Abstract**

A covering sheath (3) for a bicycle component designed to be gripped or grasped when in use on the bicycle, for example for covering a supporting body of an integrated device for controlling the brake and derailleur of a bicycle, said integrated device comprising areas (8, 9) with differentiated softness.

## Description

The present invention relates to a covering sheath for a bicycle component that is designed to be gripped or grasped when in use on the bicycle. The invention is herein illustrated with particular reference to a covering sheath for a body which is designed to be fixed to a bicycle handlebar and which forms the support of an integrated control device by means of which the cyclist controls different functions of the bicycle. It has to be considered, however, that the invention relates in general to a covering sheath applicable to any bicycle component that in use is designed to be gripped or grasped, such as for example a portion of bicycle handlebar, in particular the straight or curved ends of the handlebar itself, or an auxiliary gripping appendage which can be installed on the bicycle handlebar, or also a single lever for actuation of a device on board the bicycle, such as for example a lever for the brake actuation or a lever for the derailleur actuation of a bicycle.

In the specific case of an integrated control device used in competition bicycles, the covering sheath according to the invention is designed to be applied on the support of the control device that is mounted on each of the curved ends of the handlebar. In this way, the supporting bodies of the right and left devices perform the important function of constituting, in practice, two extensions of the handlebar in a position corresponding to which the cyclist can grip the handlebar itself. As it is known, normally associated to the integrated control device there are a lever for the brake actuation and a control of the front or rear derailleur. In the case of a derailleur control with electrical actuator, it is possible to envisage the use of electrical switches that co-operate with respective push-buttons, which are carried by the supporting body of the control and are covered by the sheath. In addition, associated to the control device there are normally one or more push-buttons electrically connected to the cycle computer, which enable the cyclist to interact in the selection of the different operating modes, said operation of selection being known as "mode select". The devices of the type described are therefore conceived to enable the cyclist to grip the handlebar in a position corresponding to the respective supporting bodies and to actuate at the same time the brake, the derailleur, or the operating modes of the cycle computer by the cyclist's fingers without, however, modifying the position of the hand on the supporting body.

Already known is the technique of foreseeing a covering sheath, of substantially uniform thickness, above the aforesaid supporting body of the control device, which functions as a protective element and at the same time enables a more convenient grip. The applicant has realized that the use of covering sheaths, normally consisting of elastomeric material, on the aforesaid control devices involves, however, some drawbacks.

A first drawback is represented by the fact that prolonged gripping of the supporting body or of the ends of the handlebar (whether these be straight or curved) by the cyclist, in particular during competitions, may cause situations of discomfort for the areas of the cyclist's hand which are subjected to the greater pressure, even leading to lesions of the bones of the cyclist's hand or to micro-abrasions of the skin.

Another drawback is represented by the fact that the covering by means of a sheath sometimes renders actuation of the electrical push-buttons set thereunder difficult, with consequent inconvenience for the cyclist.

A first aspect of the invention lies in the perception of said drawbacks and in the perception that they can be overcome through a covering sheath for a bicycle component designed to be gripped or grasped when in use on the bicycle, which is characterized in that it comprises at least one area with differentiated softness.

A second aspect of the invention lies in realizing a covering sheath that guarantees a greater comfort for the cyclist's hands, particularly in the contact areas in which they exert greater pressure, through areas with higher softness than that of the remaining part of the sheath.

A third aspect of the invention lies in realizing a sheath that provides the cyclist with a greater sensitivity in the actuation of the push-buttons mounted on the supporting body, through areas with lower softness than that of the remaining part of the sheath.

According to a first embodiment, the aforesaid areas with higher softness are associated to the contact areas of the cyclist's hand subjected to a greater pressure, such as the palm of his hand and/or the stretch defined between thumb and forefinger. The number and shape of said areas with higher softness are chosen so as to adapt to the constructional dimensions of the control device or of the ends of the handlebar.

Preferably, the areas with higher softness are realized by means of inserts made of a material which has a lower hardness than the material, typically an elastomeric one, of which the sheath is made. The connection of the inserts of the sheath is obtained preferably by means of a shape fit in through openings made in the wall of the sheath itself.

In other cases, the insert may be directly moulded in a seat obtained in the sheath.

According to a different embodiment, the aforesaid areas with lower softness are provided in a position corresponding to the push-buttons associated, for example, to the gear-change control or to the "mode select" of the cycle computer. Said areas will be preferably located in areas that are readily accessible to the cyclist's thumb, whilst their dimensions are chosen on the basis of the physical and dimensional characteristics of the push-button to be actuated. Similarly to what said with regard to the areas with higher softness, the realization of the areas with lower softness is obtained preferably by means of inserts made of a material which has a hardness higher than that of the material of which the sheath is made.

Advantageously, the sheaths realized according to the invention offer a greater degree of comfort for the cyclist's hand which grips them, maintaining, at the same time, unaltered the desired characteristics of protection afforded by the sheath.

Equally advantageously, the areas with lower softness allow a greater sensitivity for the cyclist's finger-tips during actuation of the push-buttons, in particular for the cyclist's thumb.

The purposes and advantages above mentioned will be illustrated in greater detail in what follows with reference to the annexed drawings, which are provided purely by way of non-limiting example and in which:
- Figure 1 represents a perspective view of a first embodiment of the covering sheath according to the invention, applied to an integrated control device of a known type;
- Figure 2 represents the control device of Figure 1 provided with the sheath according to the invention, applied to a curved handlebar and with the cyclist's hand in the normal position of use;
- Figure 3 represents a top plan view of a variant of the sheath of the invention, applied to an integrated control device of a known type;
- Figure 4 represents a side view of another variant of the sheath according to the invention;
- Figure 5 represents a side view of a second embodiment of the sheath according to the invention, applied to a control device of an electrical gear-change;
- Figure 6 represents a perspective view of a variant of the sheath according to the invention, applied to a control device of an electrical gear-change;
- Figures 7 to 12 illustrate the cross-sectional view according to a longitudinal vertical plane of variant embodiments of the sheath; and
- Figure 13 represents the cross-sectional view according to the plane XIII-XIII of Figure 6.

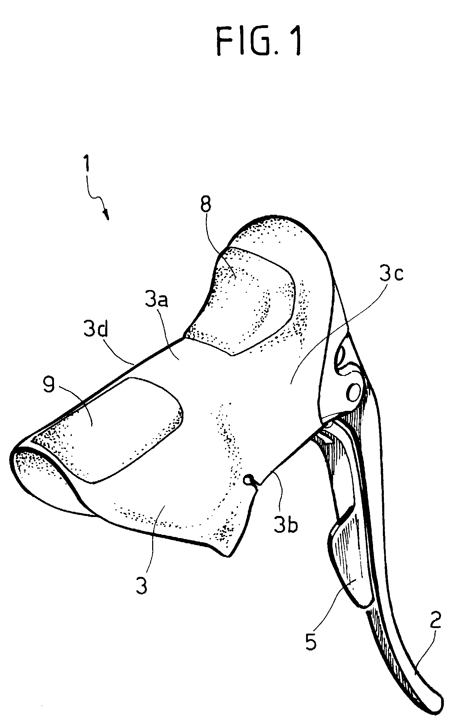

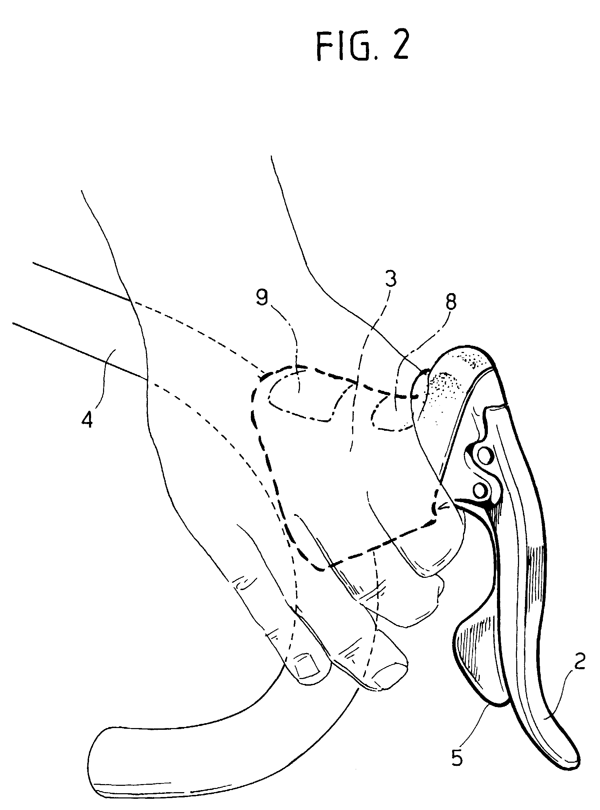

Figures 1 and 2 illustrate an integrated control device 1 of a brake and of a bicycle derailleur, in the right-hand version, i.e., to be mounted on the right end of the handlebar. The device illustrated, except for the adoption of the sheath according to the invention, may be of any known type. It is also evident that the following description may be extended to a control device mounted on the left.

The device 1 comprises a lever 2 for the brake actuation, supported in an articulated way by a supporting body that is covered with a sheath 3 made of elastomeric material in accordance with the present invention. The body can be fixed in a per se known way (Figure 2) to a bicycle handlebar 4. In the case of the version illustrated in Figures 1 and 2, the supporting body of the device integrates an actuation mechanism of one of the two bicycle derailleurs, including a lever 5 positioned behind the lever for actuation of the brake 2 and a further lever (not shown in the figures), which is positioned on the inside (i.e., facing the centre of the handlebar). The two levers actuate the derailleur in the two opposite directions of gear-shifting.

The sheath 3 that covers the supporting body of the device presents a generally tubular conformation, with a top wall 3a, a bottom wall 3b, an external side wall 3c, and an internal side wall 3d. The sheath 3 could also be devoid of the aforesaid bottom wall. When the sheath is designed to be inserted on the ends of the handlebar, whether these are straight or curved, it may have a substantially cylindrical conformation, the cylinder possibly being closed or open.

As it is clearly visible in Figures 1 and 2 and according to the invention, the top wall 3a presents two areas 8, 9 with higher softness than the remaining part of the sheath 3. In the example illustrated in said figures, the two areas 8 and 9 are constituted by inserts received within corresponding openings obtained in the wall of the sheath 3, which are located in a position corresponding to the contact areas of the cyclist's hand that are subjected to greater pressure. More precisely, the area 8 comes to be in contact with the portion of the cyclist's hand comprised between his thumb and forefinger, whilst the area 9, which is shifted laterally towards the outside with respect to the area 8, comes to be in contact with the palm of his hand. In the case where the sheath is associated to the ends of the handlebar, as above mentioned, the areas with higher softness than the remaining part of the sheath are in any case located in a position corresponding to the portion of the cyclist's hand comprised between his thumb and forefinger or else in a position corresponding to the palm of his hand.

In what follows, said areas with higher softness than the remaining part of the sheath will be indicated simply as areas with higher or increased softness.

In a first embodiment, the sheath 3 is made of elastomeric material, and the areas with increased softness 8, 9 consist of inserts which are also made of elastomeric material, but which present a greater softness as compared to the remaining part of the sheath 3. Said result may be obtained thanks to the use of an elastomeric material which has different characteristics of hardness and/or density, or else again thanks to an appropriate conformation of the inserts 8, 9, as it will be described in detail in what follows.

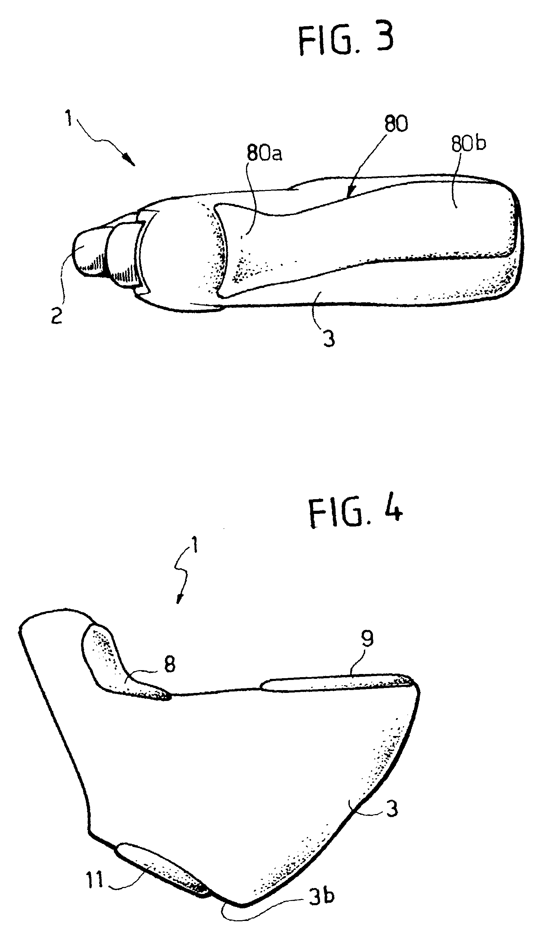

Figure 3 illustrates a variant in which the area with higher softness 80 is only one and it is in a position corresponding to the top wall 3a. Said area 80 entirely covers an area that extends longitudinally from a front portion of the top wall 3a, in a position corresponding to the area 80a of contact of the cyclist's hand defined between the cyclist's thumb and forefinger, to a rear portion of the top wall 3a, in a position corresponding to the area 80b of contact of the palm of the cyclist's hand.

In addition, with reference to Figure 4, the sheath according to the invention may also envisage a third area with increased softness, indicated by 11, in a position corresponding to the bottom surface 3b of the sheath, where the cyclist's fingers (see Figure 2) close around the body of the device 1. Like the areas 8, 9, the area 11 is defined by an insert mounted within a corresponding seat obtained in the bottom wall 3b of the sheath 3. Alternative solutions are, however, possible, according to what will be illustrated in detail in what follows.

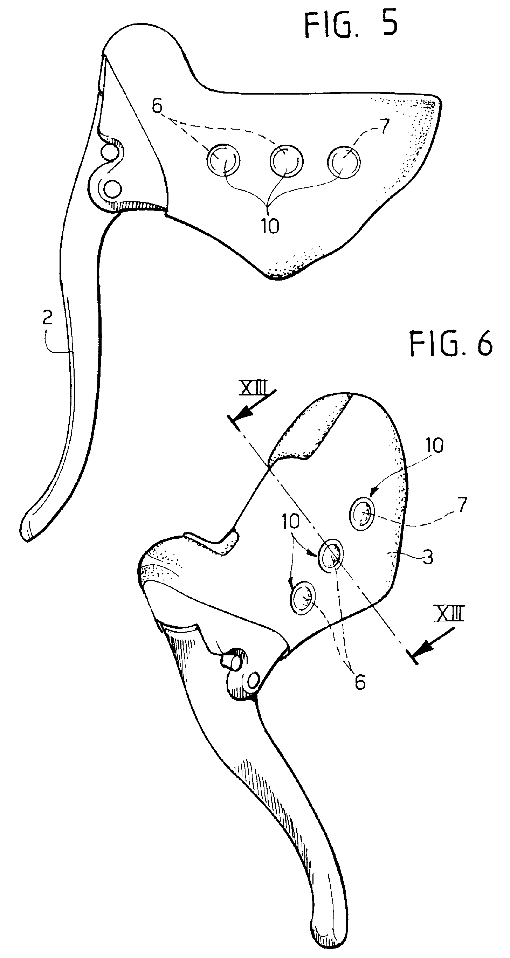

Figures 5 and 6 illustrate, instead, a variant of the control device in which the device for the derailleur actuation is of the electrical-actuation type and envisages a pair of push-buttons 6, covered by corresponding portions of the sheath 3, designed, respectively, to control the derailleur in the two opposite directions of gear-shifting. Figures 5 and 6 illustrate also a third actuating push-button 7, designed to control the mode of operation of a display unit associated to the computer on board the bicycle. Said push-button 7 may likewise be provided in the "mechanical" version illustrated in Figures 1 and 2, on the inner side of the control (not visible in the drawings).

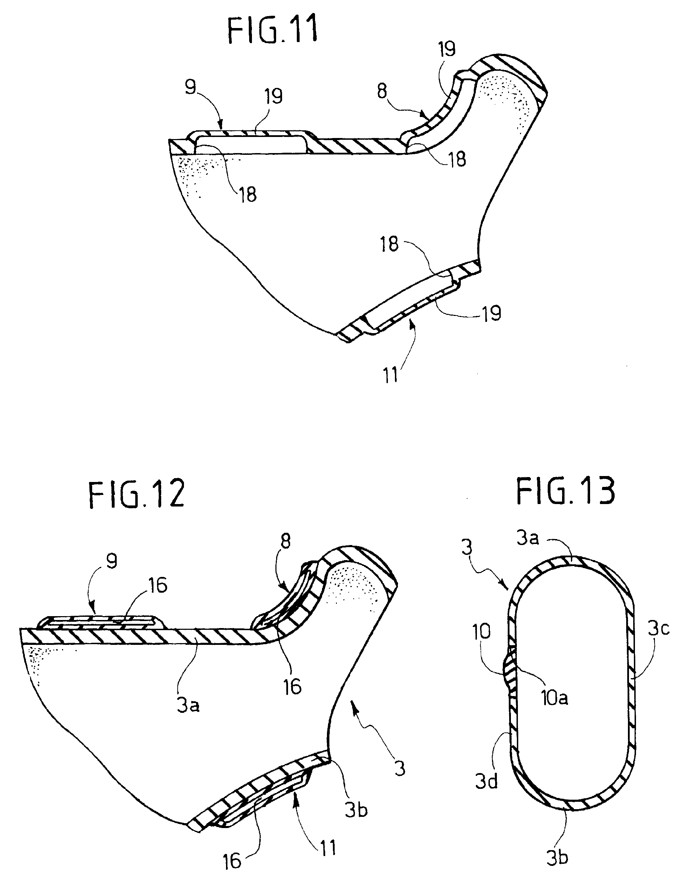

The sheath moreover includes three portions 10 that cover the push-buttons 6, 7, each of which is defined, for instance, by an insert (see also Figure 13) fixed in any way, for example vulcanized, within a respective seat 10a obtained in the wall of the sheath 3. According to the invention, the portions of sheath 10 are made of a material which has lower or decreased softness with respect to the material that constitutes the remaining part of the sheath, so as to guarantee a greater sensitivity of actuation for the cyclist. Said portions 10, preferably but not necessarily, present an outer surface shaped and/or coloured for facilitating identification of the push-buttons by the cyclist.

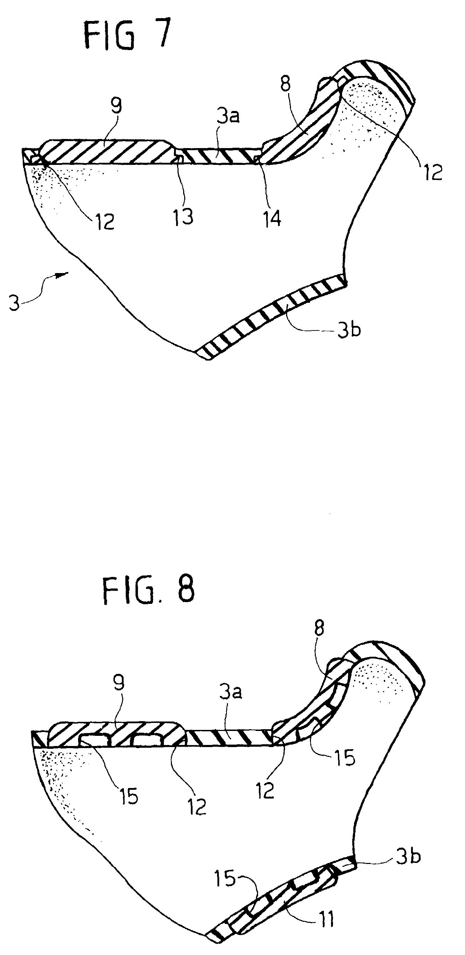

Figure 7 illustrates a cross-sectional view in a longitudinal vertical plane of the sheath 3 in the embodiment in which there are provided only the areas 8, 9 with increased softness. In the case of Figure 7, each of said areas is defined by an insert made of an elastomeric material which has characteristics of density and/or of hardness different from those of the elastomeric material forming the remaining part of the sheath 3. Of course, any suitable material, for example a synthetic material or a silicone material, may be used both for the sheath 3, and for the inserts 8, 9. Once again in the case of Figure 7, each of said inserts is received, through a shape fit, in an opening 12 obtained in the top wall 3a of the sheath 3. The edge of the opening 12 defines a peripheral surface of contrast 13, upon which a peripheral edge 14 of each insert bears, so as to prevent the insert coming out of the sheath. Obviously, in the condition of use, any sliding of the insert 8 or 9 out of the sheath 3 in the direction of the inside of the sheath 3 is prevented by the surface of the body on which the sheath 3 is applied.

It should again be noted that the thickness of each insert 8, 9, in the case illustrated in Figure 7, is greater than the thickness of the wall 3a of the sheath, so that it is projects from the adjacent surface of the sheath. It is likewise possible to realize the inserts with their outer surface flush with the adjacent surface of the sheath.

Figure 8 illustrates a cross-sectional view of the variant that also foresees the bottom insert 11. Obviously, what has been indicated above with reference to the material and the conformation of the inserts 8, 9 is applicable also to the insert 11. In addition, Figure 8 relates to the case in which the three inserts are fixed to the edges of the respective openings 12 by vulcanizing.

Finally, in the example of Figure 8, the inserts present lightening grooves 15, which contribute also to define wall portions of reduced thickness, which are more compliant.

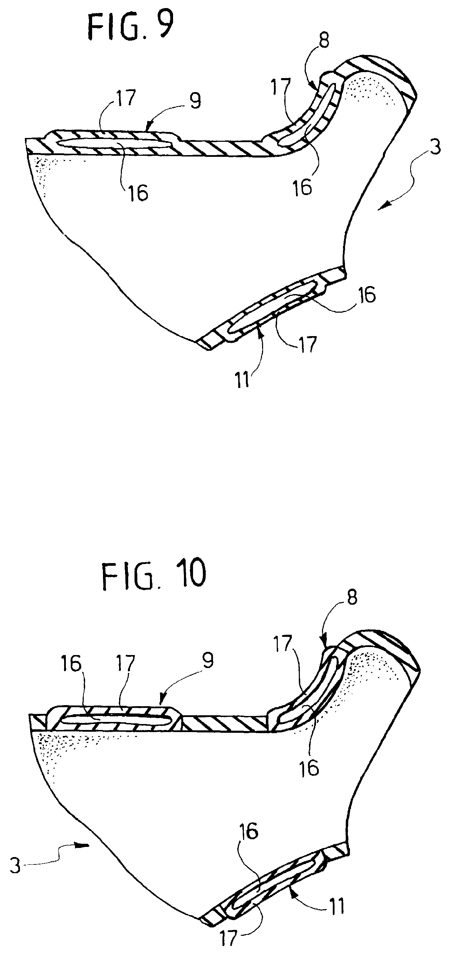

Figure 9 illustrates a variant in which the areas with increased softness 8, 9, 11 are obtained integral, i.e., of a single piece, with the sheath 3. In the specific example illustrated, each area is defined by a cushioned portion, containing a flattened cavity 16, which may for example be filled with a fluid, for example air, or a gas, or a liquid, or a material in the form of a gel or silicone material. Each cavity 16 thus defines a thin wall 17 functioning as a cushion.

Figure 10 illustrates the same solution as that of Figure 9, with reference to the provision of cavities 16 full of a fluid, but which, this time, are set inside the fixed inserts within respective openings obtained in the wall of the sheath.

Figure 11 illustrates a solution in which the sheath 3 is made of a single piece and presents, on its internal surface, open cavities 18 that define thin walls 19 in a position corresponding to the areas 8, 9, 11 functioning as cushions. In the mounted condition, the cavities 18 are closed by the surface of the body on which the sheath is mounted, and are able to receive a fluid within them, in a way similar to what is indicated for the solutions illustrated in Figures 9 and 10.

Figure 12 illustrates a variant that differs from that of Figure 10 only in that the inserts are bonded or joined by moulding on the outer surface of the sheath.

Figure 13 highlights the detail, in cross-sectional view, of the area with lower softness associated to one of the push-buttons 6 consisting of an insert, to which, as mentioned previously, there may be fixed the sheath 3 by vulcanizing. It is evident that any other known method of fixing may be used, such as for example a shape fit. It is then to be noted that the particular conformation, which is slightly rounded towards the outside of said insert, favours its convenient individuation with the tip of the cyclist's thumb.

Of course, without prejudice to the principle of the invention, the details of construction and the embodiments may vary widely with respect to what has been described and illustrated herein purely by way of example, without thereby departing from the scope of the present invention.

## Claims

1. A covering sheath (3) for a bicycle component designed to be gripped or grasped when in use on the bicycle, **characterized in that** it comprises at least one area (8, 9, 10, 11, 80) with differentiated softness.

2. The sheath according to Claim 1, **characterized in that** said area (8, 9, 11, 80) with differentiated softness presents a softness higher than the remaining part of the sheath.

3. The sheath according to Claim 2, **characterized in that** said area (8, 9, 11, 80) is associated to the area of contact of the cyclist's hand that grips said sheath in the normal condition of use.

4. The sheath according to Claim 2, **characterized in that** it presents an internal side wall (3d), an external side wall (3c), and a top wall (3a).

5. The sheath according to Claim 4, **characterized in that** said area with higher softness (80) is in a position corresponding to said top wall (3a) and covers entirely an area that extends longitudinally from a front portion of said top wall, in a position corresponding to the area (80a) of contact of the cyclist's hand defined between the cyclist's thumb and forefinger, to a rear portion of said top wall, in a position corresponding to the area (80b) of contact of the palm of the cyclist's hand.

6. The sheath according to Claim 4, **characterized in that** said area (8) with higher softness is realized in a portion of said top wall in a position corresponding to the area of contact of the cyclist's hand defined between the cyclist's thumb and forefinger.

7. The sheath according to Claim 4, **characterized in that** said area (9) with higher softness is realized in a portion of said top wall in a position corresponding to the area of contact of the palm of the cyclist's hand.

8. The sheath according to Claim 7, **characterized in that** said area (9) with higher softness is positioned laterally shifted in the direction of the external side wall (3c).

9. The sheath according to Claim 4, **characterized in that** it comprises a bottom wall (3b).

10. The sheath according to Claim 9, **characterized in that** said area (11) with higher softness is realized in said bottom wall (3b) of said sheath in a position corresponding to the points of contact of the cyclist's fingers when he grips the sheath (3).

11. The sheath according to Claim 2, **characterized in that** it comprises a second area (8, 9, 11) with higher softness than the material forming the remaining part of the sheath.

12. The sheath according to Claim 6, **characterized in that** it comprises a second area with higher softness than the material forming the remaining part of the sheath and **in that** said second area (9) is realized in a portion of said top wall in a position corresponding to the area of contact of the palm of the cyclist's hand.

13. The sheath according to Claim 12, **characterized in that** said second area (9) is staggered in the direction of said external side wall with respect to said first area.

14. The sheath according to Claim 11, **characterized in that** it comprises a third area (11) with higher softness than that of the material forming the remaining part of the sheath.

15. The sheath according to Claim 12 and 14, **characterized in that** said third area (11) is realized in said bottom wall in a position corresponding to the points of contact of the cyclist's fingers when the cyclist grips the sheath.

16. The sheath according to Claim 1, **characterized in that** said area with different softness (10) presents a lower softness than that of the material forming the remaining part of the sheath.

17. The sheath according to Claim 16, **characterized in that** said area with lower softness is provided in a position corresponding to at least one push-button (6, 7), which can be actuated by pressure exerted by the cyclist.

18. The sheath according to Claim 16, **characterized in that** it comprises a second area (10) that presents a lower softness than that of the material forming the remaining part of the sheath.

19. The sheath according to Claim 18, **characterized in that** said second area (10) with lower softness is provided in a position corresponding to a push-button (6, 7), which can be actuated by pressure exerted by the cyclist.

20. The sheath according to Claim 18, **characterized in that** it comprises a third area (10) that presents a lower softness than that of the material forming the remaining part of the sheath.

21. The sheath according to Claim 20, **characterized in that** said third area (10) with lower softness is provided in a position corresponding to a push-button (6, 7), which can be actuated by pressure exerted by the cyclist.

22. The sheath according to any one of Claims 16 to 21, **characterized in that** said area (10) with lower softness is set in an area that can be reached by the cyclist's thumb when his hand is in the operative position for gripping said component.

23. The sheath according to Claim 1, **characterized in that** it comprises at least one second area with differentiated softness as compared to the material forming the remaining part of the sheath, said first area presenting higher softness and said second area presenting lower softness.

24. The sheath according to Claim 23, **characterized in that** said first area is associated to the area of contact of the cyclist's hand, which grips said sheath, and said second area is provided in a position corresponding to a push-button, which can be actuated by pressure exerted by the cyclist.

25. The sheath according to Claim 23, **characterized in that** it comprises a second area with higher softness than that of the material forming the remaining part of the sheath.

26. The sheath according to Claim 25, **characterized in that** it comprises a third area with higher softness than that of the material forming the remaining part of the sheath.

27. The sheath according to Claim 23, **characterized in that** it comprises a second area with lower softness than that of the material forming the remaining part of the sheath.

28. The sheath according to Claim 27, **characterized in that** it comprises a third area with lower softness than that of the material forming the remaining part of the sheath.

29. The sheath according to any one of the previous claims, **characterized in that** said area is realized by means of an insert associated to said sheath.

30. The sheath according to Claim 29, **characterized in that** said insert is made of a material which has hardness different from the material forming the remaining part of the sheath.

31. The sheath according to Claim 29, **characterized in that** said insert is made of a material which has the same hardness as the material forming the remaining part of the sheath and is shaped so as to present said different softness.

32. The sheath according to Claim 30, **characterized in that** it is made of a first synthetic or elastomeric material and that said insert is made of a second synthetic or elastomeric material.

33. The sheath according to Claim 29, **characterized in that** said insert is made of a synthetic or elastomeric material in solid or gel form.

34. The sheath according to Claim 29, **characterized in that** said insert is made of a silicone material.

35. The sheath according to Claim 29, **characterized in that** said insert is joined to the sheath by means of a shape fit.

36. The sheath according to Claim 29, **characterized in that** said insert is mounted within a through opening presenting a corresponding shape obtained in a wall of the sheath.

37. The sheath according to Claim 36, **characterized in that** the surface of said opening defines a contrast engaged by a peripheral portion of the insert so as to prevent the insert from coming out of the aforesaid opening.

38. The sheath according to Claim 29, **characterized in that** said insert is directly moulded within a seat obtained in the sheath.

39. The sheath according to Claim 29, **characterized in that** said insert presents an internal cavity.

40. The sheath according to Claim 39, **characterized in that** said cavity is filled with a fluid chosen among: air, a liquid material, a gel material, and a silicone material.

41. The sheath according to Claim 29, **characterized in that** said insert is inserted in a seat obtained in the sheath.

42. The sheath according to Claim 29, **characterized in that** said insert is joined to the outer surface of the sheath.

43. The sheath according to Claim 1, **characterized in that** said area is defined by a part that is integral with the sheath and is shaped so as to provide the desired degree of softness.

44. The sheath according to Claim 43, **characterized in that** said integral part presents an internal cavity.

45. The sheath according to Claim 44, **characterized in that** said cavity is filled with a fluid chosen among: air, a liquid material, a gel material, and a silicone material.

46. The sheath according to Claim 43, **characterized in that** said integral part presents a thickness thinner than the remaining part of the sheath.

47. The sheath according to Claim 43, **characterized in that** said part with thinner thickness is distanced from the internal surface of the sheath.

48. The sheath according to Claim 43, **characterized in that** said integral part defines a closed cavity in co-operation with the surface of the body on which the sheath is applied in its mounted condition.

49. The sheath according to Claim 1, **characterized in that** said area is optically distinguishable from the remaining part of the sheath as regards colour, shape, decoration, or characteristics of its surface.

50. The sheath according to Claim 1, **characterized in that** said area has an outer surface flush with respect to the outer surface of the sheath.

51. The sheath according to Claim 1, **characterized in that** said area has an outer surface projecting with respect to the outer surface of the sheath.

52. A covering sheath for a body that can be associated to the handlebar of a bicycle, **characterized in that** it is made according to one or more of the previous claims.

53. A covering sheath for a body designed to be fixed to the handlebar of a bicycle and forming the support of a lever for the brake actuation of the bicycle, **characterized in that** it is made according to one or more of Claims 1 to 51.

54. A covering sheath for a body designed to be fixed to the handlebar of a bicycle and forming the support of an integrated control for a bicycle, **characterized in that** it is made according to one or more of Claims 1 to 51.

55. A covering sheath for the ends of a bicycle handlebar, **characterized in that** it is made according to one or more of Claims 1 to 51.
